# EUROPEAN PATENT APPLICATION

(11) **EP 4 091 867 A1**
(43) Date of publication of application: **23.11.2022**
(21) Application number: 20914005.2
(22) Date of filing: 23.12.2020
(51) Int. Cl.: B60L 53/80, B66F 9/06

(54) **ELECTRIC CAR**

(30) Priority: 16.01.2020 ES 202030026
(71) Applicant: SCUTUM LOGISTIC SL, ES-08950 Esplugues de Llobregat (ES)
(72) Inventor: SOTELO ROSELL, Carlos, 08950 ESPLUGUES DE LLOBREGAT (ES)
(74) Representative: Toro Gordillo, Ignacio Maria
(86) International application number: PCT/ES2020/070815
(87) International publication number: WO 2021/144484

(57) **Abstract**

"The car of the invention, in addition to presenting minimal dimensions by virtue of the particular distribution of its seats, presents the special feature of including a system of easily exchangeable batteries, wherein said batteries include means which greatly facilitate their transport during removal and insertion operations, owing to a manual grip handle (7) and a folding structure (8) with locking and unlocking means, including a set of wheels (9) which, when deployed and resting on the ground, cause the battery (6) to be raised to the level of said transversal chamber (5), rendering unnecessary any vertical effort for coupling the battery to the vehicle."

## Description

### TECHNICAL FIELD

The present invention relates to an electric car, and more specifically to a small-sized electric car that makes it suitable for driving and parking in cities with high traffic volumes.

The object of the invention is to provide an electric car which, in addition to its distribution that minimises the volumetric occupancy thereof, has a system of removable and exchangeable electric batteries that makes it possible to eliminate long idle periods of the vehicle while the batteries are being recharged, so that said replacement period of one battery with another may be even shorter than that entailed by filling the fuel tank of a conventional vehicle.

Another object of the invention is that the process of replacing a battery or group of batteries with another is simple and comfortable, such that a great level of physical fitness is not required, said operation being able to be carried out regardless of the physical conditions of the driver.

### BACKGROUND OF THE INVENTION

As is known, the trend towards using electric vehicles is increasing due to the environmental advantages that their use entails, both in terms of air pollution and noise pollution.

The main problem with these vehicles is the limited autonomy of the batteries thereof, which increases as the weight of the vehicle decreases.

Adding to this problem is the time required to fully charge a battery or group of batteries of this type, and that is surely the reason why the use of this type of vehicle is not fully extended.

In an attempt to avoid this problem, vehicles that incorporate removable batteries are known, so that through service stations specifically designed for this purpose, discharged batteries can be replaced with charged batteries, enabling the vehicle to continue running without wasting time recharging said batteries.

The problem with this type of vehicle is that its batteries are not easily accessible, and it must be taken into account that they are very heavy elements, so their replacement requires very significant efforts, in some cases requiring specific machines or tools for said replacement.

In an attempt to mitigate this problem, electric batteries for vehicles equipped with wheels are known which, although they facilitate the transfer of the battery from one place to another, still have the inherent problem of having to move said battery upwards once arranged on the implementation area, which continues to require a significant effort.

### DESCRIPTION OF THE INVENTION

The electric car that is recommended solves the aforementioned problems in a completely satisfactory manner, based on a simple but effective solution.

For this, and more specifically, the vehicle of the invention has a two-seater character, with a minimum volumetric occupation that allows its dimensions and weight to be reduced, thus increasing the autonomy thereof, wherein the seats are arranged transversely to the frame, but wherein the co-pilot's seat is slightly offset backwards, such that the area of the backrest of the pilot's seat can partially invade the support area of the co-pilot's legs on the seat, without being affected in their comfort, thus being able to reduce the overall width of the vehicle, making it more manageable and easier to park.

In any case, and in accordance with the essence of the invention, it has been provided that under the bench on which the pilot's seat is located there is a transversal chamber in which the battery or group of electric batteries of the vehicle can be plugged and unplugged, which can be accessed through the vehicle's own access door, thus simplifying the structure thereof.

Then, said group of batteries, which will form a compact and unitary assembly, will have a removable character, with the special feature that the casing associated thereto will have a handle for pulling said battery, as well as a set of wheels associated with a collapsible structure that during battery removal operations will automatically deploy before said battery has completely come out of the insertion guides of the same. In this way, they automatically rest on the ground, bridging the distance between the reception chamber of said battery and the ground, with no type of vertical effort being required on said battery.

The aforementioned set of wheels will enable the battery to be comfortably transported to a charging station, where it can be plugged in a manner analogous to the way it is plugged into the vehicle, so that the user can replace said discharged battery with a fully charged one, with the same structuring. In this way, due to said wheels with folding legs, there is no need to carry out any type of vertical effort on the battery, the battery directly facing the reception chamber of the vehicle such that during the battery insertion operation, the folding structure associated with the wheels will fold once the battery has been partially inserted into the corresponding guides, which may have rolling elements that facilitate said insertion, the use of vertical type efforts not being required at any time.

In this way, an extremely versatile, autonomous, easy-to-recharge vehicle is achieved without long waiting times due to the possibility of replacing its batteries with others, an operation that is extremely simple and does not require great effort.

### DESCRIPTION OF THE DRAWINGS

As a complement to the description that will be provided herein, and for the purpose of helping to make the features of the invention more readily understandable, according to a preferred practical exemplary embodiment thereof, said description is accompanied by a set of drawings constituting an integral part thereof in which, by way of illustration and not limitation, the following is represented:

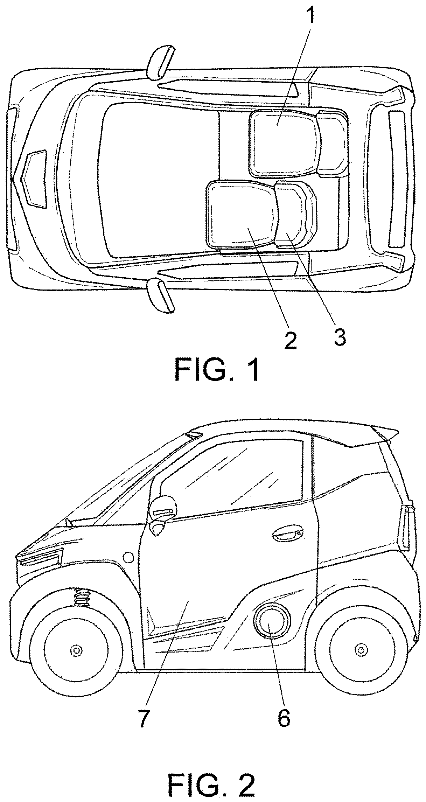

Figure 1 shows a plan view of the seat distribution of an electric car made according to the object of the present invention.
Figure 2 shows a side elevation view of the vehicle of the invention.
Figure 3 shows a perspective detail view of the car at the level of the receptor compartment for receiving the replaceable battery thereof.
Finally, Figure 4 shows a perspective view of the appearance that the electric battery charging station could have.

### PREFERRED EMBODIMENT OF THE INVENTION

In view of the figures outlined, it can be seen how the car of the invention draws from the conventional structure of an electric car in terms of the propulsion, steering, lighting and safety systems thereof, with the particularity that it includes a pair of seats in which the seats are arranged transversely to the frame, but wherein the co-pilot's seat (1) is slightly offset backwards, such that the area of the backrest (3) of the pilot's seat (2) can partially invade the support area of the co-pilot's legs on the seat, without being affected in their comfort, which entails a reduction in the width of the vehicle that allows it to be more manageable and easier to park.

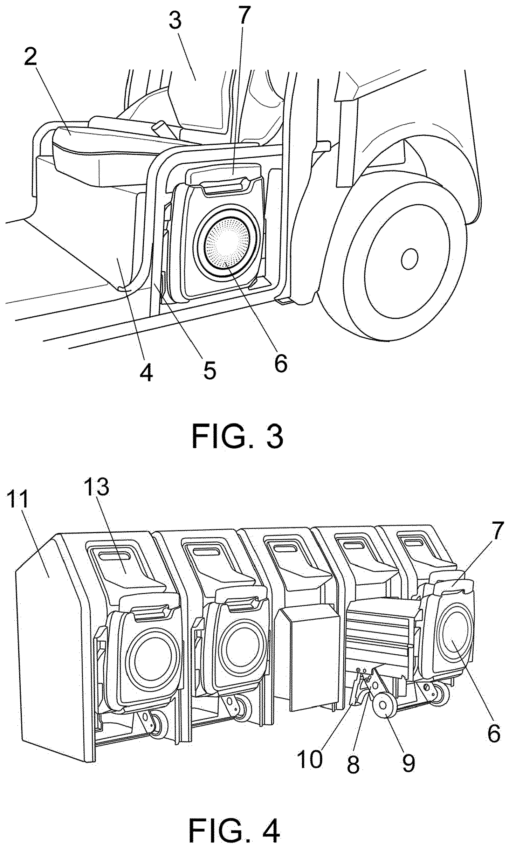

As can be seen in figure 3, under the bench (4) of the pilot's seat (2), a transversal chamber (5) is defined intended to receive therein the electric battery (6) or set of batteries of the vehicle, which in any case will have a monobloc character.

Access to said transversal chamber (5) may be made directly through the door (7) of the vehicle, or it may include a specific security gate for its access.

In any case, in said transversal chamber (5) a series of guides will be established that facilitate the insertion and removal of the battery (6), which will be equipped with a manual grip handle (7) and, as can be especially seen in Figure 4, a folding and lockable structure (8) for a set of wheels (9) that enable the battery to be horizontally moved at the level of the transversal chamber (5), thus avoiding having to make any vertical effort.

The folding structure (8) supporting the wheels (9) will be locked once deployed, including a trigger (10) or release element of said mechanism that during the battery insertion operations either in the transversal chamber (5) or in the recharging units (11) of the corresponding service station (12), enables said structure to collapse by contact on the lower edge of said chamber, when the battery is sufficiently inserted so that the vertical support that offers said structure is not required.

The recharging units (11) will include an interface (13) for charging for the corresponding services, thus making it possible to exchange discharged batteries (6) for charged batteries in a minimum time, equal to or shorter than the time it takes for a conventional vehicle to fill its tank with fuel.

## Claims

1. ^{a}.- Electric car, **characterised in that** under the bench (4) of the seats there is a transversal chamber (5) designed to receive within it an electric battery (6) or a set of interchangeable batteries by means of the corresponding means of guidance, said batteries being a monoblock and having a manual carrying handle (7) and a folding structure (8), with locking and unlocking means, which has a set of wheels (9) which, when unfolded and resting on the ground, raise the battery (6) to the level of said transversal chamber (5); It is foreseen that the batteries (6) can also be plugged into recharging units (11) of service stations (12) on an interchangeable basis.

2. ^{a}.- Electric car, according to claim 1, **characterised in that** access to the transversal chamber (5) for receiving the battery (6) is through the doors (7) of the vehicle.

3. ^{a}.- Electric car, according to claim 1, **characterised in that** access to the transversal chamber (5) for receiving the battery (6) is through a specific safety hatch.

4. ^{a}.- Electric car, according to claim 1, **characterised in that** it has a two-seater character, in which the seats are arranged transversally to the frame, with the particularity that the co-pilot's seat (1) is slightly offset backwards with respect to the pilot's seat, so that the backrest area (3) of the pilot's seat (2) can partially invade the support area of the co-pilot's legs on the seat.
